Europäisches Patentamt

(19) European Patent Office

Office européen des brevets

(11) Publication number: **0 076 332**
**B1**

(12) **EUROPEAN PATENT SPECIFICATION**

(45) Date of publication of patent specification: **09.09.87**

(21) Application number: **81107167.9**

(22) Date of filing: **10.09.81**

(51) Int. Cl.⁴: **B 07 C 3/14,** G 06 K 9/32

(54) **Optical character reader with pre-scanner.**

(43) Date of publication of application:
**13.04.83 Bulletin 83/15**

(45) Publication of the grant of the patent:
**09.09.87 Bulletin 87/37**

(84) Designated Contracting States:
**DE FR GB IT NL**

(56) References cited:
**US-A-3 846 753**
**US-A-4 034 341**
**US-A-4 061 914**
**US-A-4 158 835**

**PROCEEDINGS OF THE IEEE, vol. 56, no. 8,
August 1968, pages 1292-1301, New York,
USA,H. GENCHI et al.: "Recognition of
handwritten numerical characters for
automatic letter sorting"**

**L'ONDE ELECTRIQUE, vol. 46, no. 477,
December 1966, pages 1370-1383, Paris, FR, M.
BORDES et al.: "Un système de lecture
automatique de caractères dactylographiés"**

The file contains technical information
submitted after the application was filed and
not included in this specification

(73) Proprietor: **Kabushiki Kaisha Toshiba
72, Horikawa-cho Saiwai-ku
Kawasaki-shi Kanagawa-ken 210 (JP)**

(72) Inventor: **Kizu, Shuji
9-209 Noba-jutaku 628 Noba-cho
Konan-ku Yokohama-shi (JP)**
Inventor: **Ikeda, Tsutomu
4-26-10, Higashi nippori
Arakawa-ku Tokyo (JP)**
Inventor: **Iwamoto, Masanori
5-9-13, Daizawa
Setagaya-ku Tokyo (JP)**

(74) Representative: **Henkel, Feiler, Hänzel & Partner
Möhlstrasse 37
D-8000 München 80 (DE)**

Note: Within nine months from the publication of the mention of the grant of the European patent, any person may
give notice to the European Patent Office of opposition to the European patent granted. Notice of opposition shall
be filed in a written reasoned statement. It shall not be deemed to have been filed until the opposition fee has been
paid. (Art. 99(1) European patent convention).

## Description

This invention relates to an optical character reader, and particularly to an optical character reader which can read a postal code written or typed on a postal item.

A known optical character reader (OCR) (US—A—4 034 341) for reading the postal code of a postal item comprises a pre-scanner and a main scanner which are spaced for a distance along the transport path of postal items. The pre-scanner coarsely scans a postal item, for example an envelope, and generates video signals corresponding to the pattern of the postal item. According to the video signals the position of the postal code is determined through format decision. Based on the result of the format decision the main scanner scans finely the postal code. The optical character reader has a problem, however. The pre-scanner cannot distinguish the postal code from characters written or typed near the code, at the same line or the line above or below the code. It therefore often regards such characters as part of the postal code. When this happens, a correct format decision is impossible and the envelope will be rejected. The optical character reader has but a poor reading accuracy.

Moreover, US—A—4,158,835 proposes to include in the character reader known from US—A—4,034,341 means for selecting from the various information fields on the postal item a particular field, i.e., the window area of a letter envelope which is then finely scanned.

Accordingly an object of this invention is to provide an optical character reader with an improved reading accuracy.

According to the invention, this object is achieved by the optical character reader defined in claim 1.

This invention can be more fully understood from the following detailed description when taken in conjunction with the accompanying drawings, in which:

Fig. 1 is a block circuit diagram of an optical character reader according to this invention;

Fig. 2 is a plan view of a postal item;

Fig. 3 shows a pattern of a postal item, shown in a few blocks;

Fig. 4 shows a block constituting a destination address; and

Fig. 5 illustrates how characters are separated.

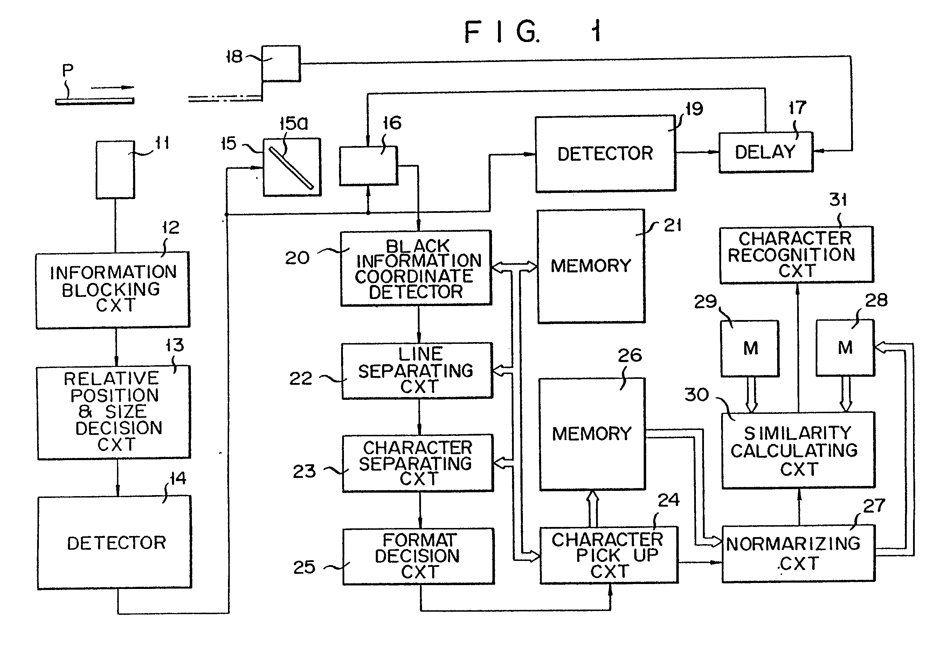

As shown in Fig. 1, a pre-scanner 11 has its output coupled to the input of an information field locating circuit 12. The pre-scanner 11 coarsely scans a postal item P and generates video signals representing the surface pattern of the postal item P. The information field locating circuit 12 processes the video signals, thus dividing the surface pattern of the item P into a plurality of information fields or pattern blocks. More precisely, the circuit 12 includes, for example, a counter which processes the video signals and calculates the coordinates of the pattern blocks in a known manner. The output of the circuit 12 is connected to the input of a relative position and size decision circuit 13. The circuit 13 receives the output signals of the circuit 12 or block information and processes the block information, thus determining the positional relation of the pattern blocks and the sizes of the pattern blocks. The output of the circuit 13 is coupled to the input of an address block position decision circuit 14. The circuit 14 determines the coordinate of the upper or lower side of an address block which have been determined by the circuit 13. The output of the circuit 14 is coupled to a galvanometer 15, a main scanner 16 and a detector 19.

The galvanometer 15 has a movable mirror 15a. The mirror 15a is moved according to the output data from the address block position decision circuit 14. The mirror 15a is so moved as to determine the size of an area (i.e. the address block) of the postal item P, which is to be scanned finely by the main scanner 16. The main scanner 16 stands in face-to-face relation with the galvanometer 15. The set terminal of the main scanner 16 is connected to the output of a delay circuit 17. The delay circuit 17 has two input terminals which are connected to a detector 18 and the detector 19, respectively. The detector 18 is so designed as to detect an end of a postal item P. The detector 19 is so designed as to detect a delay time corresponding to a distance l between the leading edge of the address block and the end of the postal item P.

The output of the main scanner 16 is connected to the input of a black information coordinate detector 20 representing character line discriminating means. The detector 20 calculates the coordinates of the black points forming the address block according to the output signals of the main scanner 16, i.e. high resolution video signals corresponding to the pattern of the address block. The high resolution video signals are stored into a memory 21. The memory 21 is connected to a line separating circuit 22, a character separating circuit 23 and a character pickup circuit 24. The output of the detector 20 is connected to the input of the line separating circuit 22, the output of the circuit 22 is connected to the input of the character separating circuit 23, and the output of the circuit 23 is connected to the input of a format decision circuit 25. The output of the circuit 25 is connected to the set terminal of character pickup circuit 24 which passes the video data to a memory 26.

The output of the character pickup circuit 24 is connected to the input of a normalizing circuit 27 receiving also the data from the memory 26, the output of the normalizing circuit being connected to the write-in port of a memory 28. Further provided is a memory 29 which stores standard character patterns. The read-out port of the memory 28 and that of the memory 29 are coupled to a similarity calculating circuit 30. The output of the circuit 30 is connected to a character recognition circuit 31.

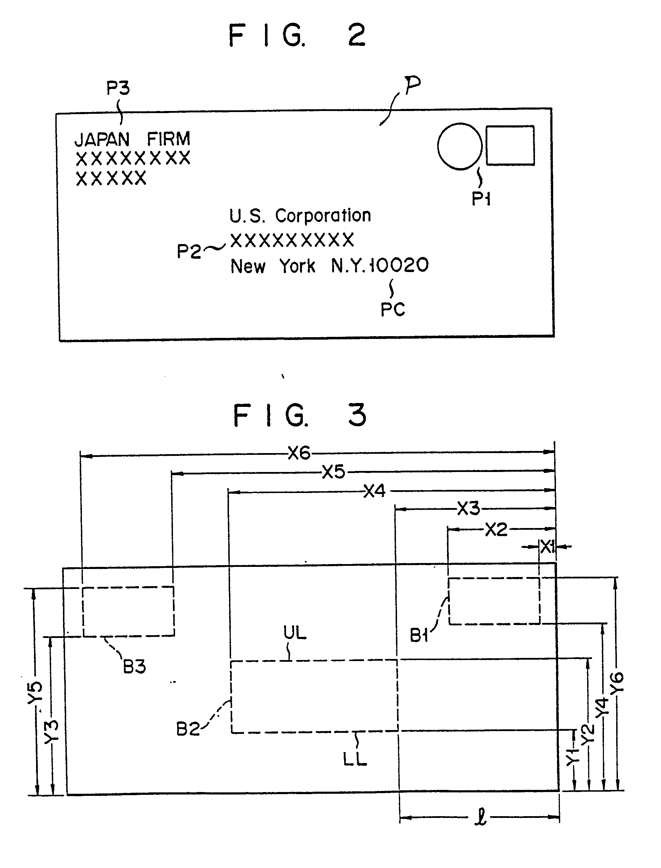

Now it will be described how the optical character reader of Fig. 1 reads a postal code PC written or types on such a postal item P as shown in Fig. 2.

The postal item P has a post stamp P1 glued to it.

On the item P a destination address P2 is typed or written and a sender's address P3 is printed, typed or written. The postal item P is transported at a predetermined speed in the direction of arrow, carried by a transport device (not shown). As the postal item P is transported, the pre-scanner 11 scans the item P coarsely, at the pitch of, for example, 0.2 mm. The pitch of scanning depends on the transport speed of the postal item P and the vertical scanning period. The pre-scanner 11 generates video signals which represent the pattern of the postal item P. The video signals are supplied to the information field selecting circuit 12.

The circuit 12 measures the periods during which each video signal remains at a white level and a black level. Further the circuit 12 counts scanning lines which correspond to video signals which remain at a black level for some time. The periods and the scanning lines having been measured and counted, a stamp block B1, a destination address block B2 and a sender's address block B3 are detected as shown in Fig. 3. The position of each block is determined by detecting the coordinates of its four corners. That is, the stamp block B1 is located by the coordinates (X1, Y6), (X2, Y6). (X2, Y4) and (X2, Y6). Similarly, the destination address block B2 is located by the coordinates (X3, Y1), (X3, Y2), (X4, Y1) and (X4, Y2). And the sender's address block B3 is located by the coordinates (X5, Y3), (X5, Y5), (X6, Y3) and (X6, Y5). The circuit 12 generates coordinate information items which represent these coordinates. The information items are supplied to the block relative position and size decision circuit 13. According to the information items the circuit 13 determines the relative positions of the blocks B1, B2 and B3 and the sizes of these blocks B1, B2 and B3. That is, the circuit processes the information items and determines the position and size of each block. The circuit 13 generates data representing the positions and sizes of the blocks B1, B2 and B3, which are supplied to the address block coordinate detecting circuit 14. The circuit 14 determines the coordinate of, for example, the lower side LL or upper side UL of the destination address block B2. Further it determines the length of the side LL or UL. The coordinate of the lower side LL is Y1 or the coordinate of the upper side UL is Y2. The output data of the circuit 14 are supplied to the galvanometer 15.

According to the data from the address block coordinate detecting circuit 14, the mirror 15a of the galvanometer 15 so moves as to receive an image of the entire destination address P2. When the postal item P reaches the detector 18, the detector 18 supplies a detection signal to the delay circuit 17. Then the delay circuit 17 produces no output signal until the postal item P reaches a position where the main scanner 16 can scan the front side of the destination address block B2 reflected in the mirror 15a. When the delay circuit 17 generates an output signal, the signal is supplied to the main scanner 16. In response to the output signal of the circuit 17 the main scanner 16 starts scanning finely the image of the destination address block B2, at the pitch of, for example, 0.125 mm. The main scanner 16 generates high resolution video signals, which are supplied to the black information coordinate detector 20.

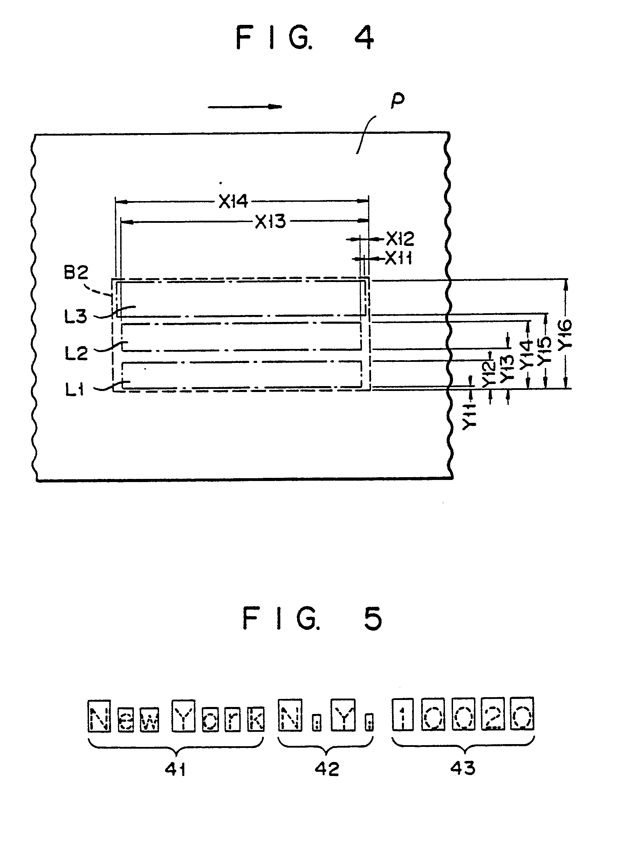

According to the high resolution video signals from the main scanner 16, the detector 20 detects the black data of the destination address block B2, i.e. the coordinates of character lines L1, L2 and L3 which are shown in Fig. 4. The coordinates of the lines L1, L2 and L3 are defined by using the adjacent two sides of the address block B2 as X axis and Y axis, respectively. The detector 20 generates data representing the coordinates of the lines L1, L2 and L3. That is, the line L1 is located by the coordinates (X12, Y11), (X12, Y12), (X13, Y11) and (X13, Y12). The line L2 is located by the coordinates (X12, Y13), (X12, Y14), (X13, Y13) and (X13, Y14). The line L3 is located by the coordinates (X11, Y15), (X11, Y16), (X14, Y15) and (X14, Y16). These line coordinate data are stored into the memory 21, which also stores pattern information, which consists of binary coded data corresponding to the high resolution video signals generated by the main scanner 16.

The line coordinate data are supplied also to the line separating circuit 22. The circuit 22 processes the line coordinate data and picks up the character line L1 including the character of the postal code. The circuit 22 generates data representing the line L1, which is supplied to the character separating circuit 23. The circuit 23 divides the line L1 into such character masks as shown in Fig. 5 and generates information representing the character masks. The character mask information is supplied to the format decision circuit 25, which determines a city name block 41, a state name block 42 and a postal code block 43. When the address information corresponding to the postal code block 43 is supplied to the character pickup circuit 24, the circuit 24 takes from the memory 21 the character information which corresponds to the postal code block 43. The character information thus picked up is normalized by the normalizing circuit 27 and stored into the memory 28. The postal code character information is then transferred, character by character, to the similarity calculating circuit 30.

The similarity calculating circuit 30 calculates the similarity of the postal code characters with respect to the standard character patterns stored in the memory 29. The result of the calculation is supplied to the character recognition circuit 31. According to the similarity calculated, the circuit 31 recognize the postal code or all the characters of the postal code (in this example, "10020"). Once the postal code is thus recognized, the postal item P is sorted into a chute corresponding to the postal code.

As mentioned above, a postal item is coarsely scanned by a pre-scanner and the surface pattern of the postal item is divided into a plurality of blocks or fields. A desired one of these blocks are selected, for example, a destination address block. The coordinates of the upper or lower side of the selected block is determined by a coordinate detecting circuit, which generates data representing the coordinate. These data determine a limited area of the selected block, which is to be scanned by a main scanner. The main scanner finely scans the limited area, thus generating high resolution video signals. The high resolution signals are processed, thereby separating one line of character from the other lines belonging to the selected block and further separating the characters of each line from one another. This done, each character is recognized or identified. Since the character lines can be distinguished from one another and the characters of each line can be distinguished from one another, it seldom becomes impossible to recognize a character.

**Claims**

1. An optical character reader comprising

— a prescanner (11) for coarsely scanning a surface of an object (P) carrying a plurality of spatially separate information fields (B1, B2, B3) including fields containing each a plurality of character lines, said prescanner providing a first video signal in response to the scanning of the object surface,

— information field selecting means (12, 13, 14) for providing coordinate data representative of the position of a particular one (B2) of said fields containing character lines in a coordinate system related to said surface,

— a main scanner (15, 16) controlled by said coordinate data from said selecting means to scan finely said particular information field (B2), said main scanner providing a second video signal,

— an information reading circuit (20—31) arranged to recognise, from said second video signal, a piece of information in a specific one (L1) of the character lines (L1, L2, L3) in said particular information field (B2), said reading circuit including memory means (21) for the second video signal and character recognition means (24, 26—31),

the optical reader being characterised in that

(a) the information field selecting means comprise

(i) an information field locating circuit (12) arranged to determine the position of each of the information fields (B1, B2, B3) on the scanned surface from the first video signal, and

(ii) a coordinate detecting circuit (13, 14) arranged to derive said coordinate data in response to the output signal from the locating circuit (12) by taking into account the relative position of the located information fields,

(b) the information reading circuit comprises

(i) character line discriminating means (20) arranged to derive, from said second video signal, coordinate data defining the position of each of said character lines (L1, L2, L3) in said particular information field (B2),

(ii) line separating means (22) arranged to extract, from said stored video signal and in response to the coordinate data from said discriminating means (20), the video data related to said specific one (L1) of the character lines,

(iii) character separating means (23) receiving said video data related to said specific character line and generating data indicative of the position of each character in said specific character line (L1), and

(iv) a format decision circuit (25) arranged to determine, from said character position data, format data (41, 42, 43) identifying the location of each separate piece of information contained in said specific character line (L1), said format data being supplied to the character recognition means (24, 26—31) together with their associated video data.

2. An optical character reader according to claim 1, wherein said main scanner (15, 16) comprises a galvanometer (15) having a movable mirror (15a) whose position is controlled by the coordinate data from said selecting means (12, 13, 14).

3. An optical character reader according to claim 1, wherein said selecting means (12, 13, 14) outputs data corresponding to the coordinate of the lower side of the particular field (B2).

4. An optical character reader according to claim 1 or 2, wherein said pre-scanner (11) scans the surface of the object at a pitch of 0.2 mm.

5. An optical character reader according to claim 1 or 2, wherein said main scanner (15, 16) scans the particular field (B2) at a pitch of 0.125 mm.

**Patentansprüche**

1. Optischer Zeichenleser, umfassend

— einen Vorabtaster (11) zum Grobabtasten einer Fläche eines Gegenstands (P), die eine Anzahl von räumlich getrennten Informationsfeldern (B1, B2, B3), einschließlich von Feldern, die jeweils eine Anzahl von Zeichenzeilen enthalten, trägt, wobei der Vorabtaster ein erstes Videosignal in Abhängigkeit von der Abtastung der Gegenstandsfläche liefert,

— eine Informationsfeld-Wähleinrichtung (12, 13, 14) zur Lieferung von Koordinatendaten, die für die Lage eines bestimmten (B2) der Zeichenzeilen enthaltenden Felder in einem auf die genannte Fläche bezogenen Koordinatensystem repräsentativ sind,

— einen durch die Koordinatendaten von der Wähleinrichtung steuerbaren Hauptabtaster (15, 16) für die Feinabtastung des bestimmten Informationsfelds (B2), wobei der Hauptabtaster ein zweites Videosignal liefert (und)

— eine Informationsleseschaltung (20—31), um aus dem zweiten Videosignal eine Informationseinheit in einer spezifischen (L1) der Zeichenzeilen (L1, L2, L3) im bestimmten Informationsfeld (B2) zu erkennen, wobei die Leseschaltung eine Speichereinheit (21) für das zweite Videosignal und eine Zeichenerkennungseinrichtung (24, 26—31) aufweist,

4

dadurch gekennzeichnet, daß

(a) die Informationsfeld-Wähleinrichtung aufweist:

(i) eine Informationsfeld-Suchschaltung (12) zum Bestimmten der Lage jedes der Informationsfelder (B1, B2, B3) auf der abgetasteten Fläche aus dem ersten Videosignal, und

(ii) eine Koordinatendetektorschaltung (13, 14) zum Ableiten der Koordinatendaten in Abhängigkeit von Ausgangssignal von der Suchschaltung (12) unter Berücksichtigung der Relativlage der gesuchten Informationsfelder,

(b) (und) die Informationsleseschaltung aufweist:

(i) eine Zeichenzeilen-Diskriminiereinheit (20), um aus dem zweiten Videosignal Koordinatendaten abzuleiten, welche die Lage jeder der Zeichenzeilen (L1, L2, L3) im bestimmten Informationsfeld (B2) definieren,

(ii) eine Zeilentrenneinheit (22), um aus dem gespeicherten Videosignal und in Abhängigkeit von den Koordinatendaten von der Diskriminiereinheit (20) die auf die spezifische eine (L1) der Zeichenzeilen bezogenen Videodaten auszuziehen,

(iii) eine Zeichentrenneinheit (23), welche die auf die spezifische Zeichenzeile bezogenen Videodaten abnimmt und Daten erzeugt, welche die Lage jedes Zeichens in der spezifischen Zeichenzeile (L1) angeben, und

(iv) eine Formatentscheidungsschaltung (25), um aus den Zeichenlagendaten Formatdaten (41, 42, 43) zu bestimmen, welche die Lage jeder getrennten, in der spezifischen Zeichenzeile (L1) enthaltenen Informationseinheit identifizieren, wobei die Formatdaten der Zeichenerkennungseinrichtung (24, 26—31) zusammen mit ihren zugeordneten Videodaten zugeliefert werden.

2. Optischer Zeichenleser nach Anspruch 1, dadurch gekennzeichnet, daß der Hauptabtaster (15, 16) ein Galvanometer (15) mit einem bewegbaren Spiegel (15a), dessen Stellung mittels der Koordinatendaten von der Wähleinrichtung (12, 13, 14) einstellbar ist, aufweist.

3. Optischer Zeichenleser nach Anspruch 1, dadurch gekennzeichnet, daß die Wähleinrichtung (12, 13, 14) Daten entsprechend der Koordinate der Unterseite des bestimmten Felds (B2) ausgibt.

4. Optischer Zeichenleser nach Anspruch 1 oder 2, dadurch gekennzeichnet, daß der Vorabtaster (11) die Fläche des Gegenstands mit einem Schrittabstand von 0,2 mm abtastet.

5. Optischer Zeichenleser nach Anspruch 1 oder 2, dadurch gekennzeichnet, daß der Hauptabtaster (15, 16) das bestimmte Feld (B2) mit einem Schrittabstand von 0,125 mm abtastet.

**Revendications**

1. Lecteur optique de caractères comprenant:

— un pré-analyseur (11) pour analyser grossièrement une surface d'un objet (P) portant un ensemble de zones d'informations séparées spatialement (B1, B2, B3) incluant des zones contenant chacune un ensemble de lignes de caractères, le pré-analyseur fournissant un premier signal vidéo en réponse à l'analyse de la surface d'objet,

8 un moyen de sélection de zone d'informations (12, 13, 14) pour fournir des données de coordonnées représentant la position d'une zone particulière (B2) des zones contenant des lignes de caractères dans un système de coordonnées relatif à la surface,

— un analyseur principal (15, 16) contrôlé par les données de coordonnées provenant du moyen de sélection pour analyser finement la zone d'informations particulière (B2), l'analyseur principal fournissant un second signal vidéo,

— un circuit de lecture d'informations (20—31) agencé pour reconnaître, à partir du second signal vidéo, un élément d'information dans une ligne spécifique (L1) des lignes de caractères (L1, L2, L3) dans la zone d'informations particulière (B2), le circuit de lecture incluant une mémoire (21) pour le second signal vidéo et un moyen de reconnaissance de caractères (24, 26—31),

le lecteur optique étant caractérisé en ce que

(a) le moyen de sélection de zone d'informations comprend:

(1) un circuit de localisation de zone d'informations (12) agencé pour déterminer la position de chacune des zones d'informations (B1, B2, B3) sur la surface analysée à partir du premier signal vidéo, et

(ii) un circuit de détection de coordonnées (13, 14) agencé pour dériver les données de coordonnées en réponse au signal de sortie du circuit de localisation (12) en tenant compte de la position relative des zones d'informations localisées,

(b) le circuit de lecture d'informations comprend:

(i) un moyen de discrimination de ligne de caractère (20) agencé pour dériver, à partir du second signal vidéo, des données de coordonnées définissant la position de chacune des lignes de caractères (L1, L2, L3) dans la zone d'informations particulière (B2),

(ii) un moyen de séparation de lignes (22) agencé pour extraire, à partir du signal vidéo mémorisé et en réponse aux données de coordonnées provenant du moyen de discrimination (20), les données vidéo relatives à la ligne spécifique (L1) des lignes de caractères,

(iii) un moyen de séparation de caractères (23) recevant les données vidéo relatives à la ligne de caractères spécifique et engendrant des données indiquant la position de chaque caractère dans la ligne de caractères spécifique (L1), et

(iv) un circuit de décision sur le format (25) agencé pour déterminer, à partir des données de position de caractère, des données de format (41, 42, 42) identifiant l'emplacement de chaque élément d'information séparé contenu dans la ligne de caractères spécifique (L1), les données de format étant fournies au moyen de reconnaissance de caractères (24, 26—31) ainsi que leurs données vidéo associés.

2. Lecteur optique de caractères selon la revendication 1, dans lequel l'analyseur principal (15, 16) comprend un galvanomètre (15) comportant un miroir mobile (15a) dont la position est contrôlée par les données de coordonnées provenant du moyen de sélection (12, 13, 14).

3. Lecteur optique de caractères selon la revendication 1, dans lequel le moyen de sélection (12, 13, 14) engendre en sortie une donnée correspondant à la coordonnée du côté inférieure de la zone particulière (B2).

4. Lecteur optique de caractères selon l'une quelconque des revendications 1 et 2, dans lequel le pré-analyseur (11) analyse la surface de l'objet à une pas de 0,2 mm.

5. Lecteur optique de caractères selon l'une quelconque des revendications 1 et 2, dans lequel l'analyseur principal (15, 16) analyse la zone particulière (B2) à un pas de 0,125 mm.

F I G. 1

BLACK INFORMATION COORDINATE DETECTOR — 20, 21 MEMORY

CHARACTER RECOGNITION CXT — 31

INFORMATION BLOCKING CXT — 12

RELATIVE POSITION & SIZE DECISION CXT — 13

DETECTOR — 14

DETECTOR — 19

DELAY — 17

LINE SEPARATING CXT — 22

CHARACTER SEPARATING CXT — 23

MEMORY — 26

SIMILARITY CALCULATING CXT — 30

M — 29

M — 28

FORMAT DECISION CXT — 25

CHARACTER PICK UP CXT — 24

NORMARIZING CXT — 27

0 076 332

0 076 332

# F I G. 2

JAPAN FIRM
XXXXXXXX
XXXXX

U.S. Corporation
P2~XXXXXXXXX
New York N.Y.10020

PC

P3

P

P1

# F I G. 3

X6
X5
X4
X3
X2
X1

UL

B1

B3

B2

LL

Y5
Y3
Y1
Y2
Y4
Y6

ℓ

2

# F I G. 4

# F I G. 5

New York N.Y. 10020

41  42  43